Europäisches Patentamt

European Patent Office

Office européen des brevets

(11) Veröffentlichungsnummer : **0 093 395
B1**

# EUROPÄISCHE PATENTSCHRIFT

(45) Veröffentlichungstag der Patentschrift :
06.07.88

(51) Int. Cl.⁴ : **G 02 B   6/44**

(21) Anmeldenummer : 83104122.3

(22) Anmeldetag : 27.04.83

(54) Lichtwellenleiterkabel mit einem Schichtenmantel.

(30) Priorität : 30.04.82 DE 3216233

(43) Veröffentlichungstag der Anmeldung :
09.11.83 Patentblatt 83/45

(45) Bekanntmachung des Hinweises auf die Patenterteilung : 06.07.88 Patentblatt 88/27

(84) Benannte Vertragsstaaten :
AT BE CH DE FR GB IT LI NL SE

(56) Entgegenhaltungen :
EP-A- 0 079 073
DE-A- 2 507 649
DE-A- 2 817 045
FR-A- 2 265 108
FR-A- 2 468 135
PATENTS ABSTRACTS OF JAPAN, Band 6, Nr. 221 (P-153)[1099], 5. November 1982; & JP - A - 57 124 702 (NIPPON DENSHIN DENWA KOSHA) 03-08-1982

(73) Patentinhaber : Siemens Aktiengesellschaft Berlin und München
Wittelsbacherplatz 2
D-8000 München 2 (DE)

(72) Erfinder : Barfuss, Jürgen
Zielstattstrasse 139
D-8000 München 70 (DE)
Erfinder : Oestreich, Ulrich, Dipl.-Ing.
Karl-Witthalm-Strasse 15
D-8000 München 70 (DE)
Erfinder : Schöber, Gernot, Ing. grad.
Waterloostrasse 63
D-8000 München 70 (DE)
Erfinder : Schrey, Wolfgang, Dipl.-Ing.
Kraelerstrasse 8
D-8000 München 70 (DE)

**Beschreibung**

Die Erfindung bezieht sich auf ein Kabel, insbesondere Lichtwellenleiterkabel, das eine Kabelseele sowie eine die Kabelseele umgebende Sperrfolie und einen Außenmantel enthält, während in der Kabelseele eine die Längsdichtigkeit ergebende Füllmasse vorgesehen ist.

Ein Kabel dieser Art ist aus der DE-A-28 17 045 bekannt. Die Sperrfolie ist als beidseitig mit je einem Kunststoffüberzug versehenes Aluminiumband ausgebildet. Der innere Kunststoffüberzug ist durchgehend an einen Innenschlauch gebunden, während der äußere Kunststoffüberzug durchgehend an einen äußeren Schutzmantel gebunden ist. Ein derartiger Aufbau führt zwangsläufig zu einer Versteifung der Kabelkonstruktion.

Aus der EP-A-079 073 (Stand der Technik gemäß Artikel 54 (3) EPÜ) ist ein Kabel bekannt, bei dem die gefüllte Kabelseele mit einer der Zugentlastung dienenden Bespinnung oder Bewicklung versehen und außen ein Mantel aufgebracht ist. Die Bespinnung oder Bewicklung ist an ihrer Außenseite mit einer durchgehenden Schicht aus Klebematerial versehen, durch die eine Verbindung zwischen der Kabelseele und der Innenseite des Mantels hergestellt ist.

Eine Sperrfolie hat bei gefüllten Kabeln u.a. den Zweck, eine möglichst vollständige Trennung zwischen der Seelenfüllmasse einerseits und dem äußeren Kabelmantel andererseits herbeizuführen. Besonders dann, wenn diese Sperrschicht nichtmetallisch und also fast beliebig dehnbar und kaum belastbar ist, gleitet der nicht verstärkte Mantel auf einer zum Beispiel mit Petrolat gefüllten Seele bei Belastung bis zu seiner Dehnbarkeitsgrenze. Es muß also sichergestellt werden, daß diese Sperrfolie das Gleiten des Mantels auf der Seele bei Einzieh- oder Montagevorgängen nicht fördert, sondern im Gegenteil mindert. Dies ist vor allem dann der Fall, wenn keine längsversteifenden Elemente (z. B. Glasgarne) in den Mantel eingebracht werden, welche den Nachteil haben, daß durch sie die Biegefähigkeit des Kabels vermindert und seine Kosten vergrößert werden.

Es ist bekannt, für die Sperrfolien Polyamide, Polyester, Polyurethane oder andere thermoplastische oder vernetzte Stoffe zu verwenden. Dabei kann zum Zwecke einer besseren Haftung an dem meist aus Polyäthylen bestehenden Außenmantel die Sperrfolie einseitig (an der Außenseite) mit einem Schmelzkleber zum Beispiel auf Acrylat- oder Polyamid-Basis bedeckt werden.

Der vorliegenden Erfindung liegt die Aufgabe zugrunde, einen Kabelaufbau zu schaffen, der besonders einfach herzustellen ist, eine gute Längsdichtigkeit ergibt, zugleich Verstärkungselemente im Mantel überflüssig macht und die Biegefähigkeit des Kabels möglichst wenig vermindert. Gemäß der Erfindung, welche sich auf ein Kabel der eingangs genannten Art bezieht, wird dies dadurch erreicht, daß die Sperrfolie mit der Kabelseele durch eine Klebeschicht verbunden ist, die nur in Teilbereichen vorhanden ist, wobei die restlichen Bereiche zwischen der Kabelseele und der Sperrfolie von Klebeschicht freigehalten sind.

Wäre die Klebeschicht über den ganzen Umfang der Seele zwischen dieser und der Sperrfolie aufgebracht, so würden auch die Ausgleichsbewegungen der Kabelseele beim Biegen des Kabels behindert. Dies würde zu einer Verlegung der elastischen Linie nach außen und damit zum Stauchen der Seele führen. Dagegen behindert das nur in kleinen Teilbereichen vorgesehene Anheften gemäß der Erfindung diese Vorgänge nicht.

Gemäß einer vorteilhaften Ausführungsform der Erfindung wird die Ausgestaltung so vorgenommen, daß die Klebeschicht unter der Sperrfolie nur in Form eines Längsstreifens aufgebracht und der restliche Umfang von Klebeschicht freigehalten ist. Der die Klebeschicht enthaltende Teilbereich verläuft somit in diesem Fall weitgehend entlang der Kabellängsachse.

Eine andere Weiterbildung der Erfindung sieht vor, die Klebeschicht punktförmig in größeren Abständen unter der Sperrfolie verteilt anzuordnen. Es ergeben sich somit bei dieser Ausführungsform kleine fleckenförmige Bereiche an der Innenseite der Sperrfolie, in denen eine Verbindung zwischen Mantel und Kabelseele besteht.

Eine andere Ausführungsform der Erfindung ist dadurch gekennzeichnet, daß die Klebeschicht in Abständen ringförmig unter der Sperrfolie angeordnet ist. In diesem Fall ergeben sich somit entlang der Kabellängsachse gewisse Bereiche, in denen eine Verbindung besteht und größere Bereiche, in denen eine solche Verbindung zwischen Seele und Mantel nicht vorhanden ist.

Die Erfindung ist dann mit besonderem Vorteil einsetzbar, wenn auf der Kabelseele eine Bewehrung (z. B. zugfeste Bewicklung) aufgebracht ist, so daß durch die Klebeschicht eine Verbindung zwischen der Sperrfolie und dieser Bewehrung herbeigeführt wird. In Fällen, in denen die Klebeschicht in größeren Abständen punktweise unter der Sperrfolie verteilt angeordnet ist, oder bei einer ringförmig aufgebrachten Klebeschicht ist es zweckmäßig, die Abstände der Klebeverbindungen als ein ganzzahliges Vielfaches der Schlaglänge der auf die Kabelseele aufgebrachten Bewehrung zu wählen. Es ist, vor allem wegen der geforderten Längsdichtigkeit zweckmäßig, über der Sperrfolie (in Richtung der Überlappung) eine Haltewendel aufzubringen. Die Sperrfolie kann bei der Herstellung vorteilhaft als längseinlaufende Folie ausgestaltet sein, wobei die Haltewendel sowohl die Folie hält als auch auf die Seele drückt und dort für eine besonders gute Abdichtung sorgt. Die Haltewendel wird dabei zweckmäßig so fest angezogen, daß sie die Folie etwas eindrückt und sich gut haftende Kreuzungsstellen mit dem inneren Klebestreifen ergeben. Dadurch wird der eventuell entstehende Wendelspalt unter der Folie systematisch gedichtet.

Für die Haltewendel selbst wird zweckmäßig ein dünnes, temperaturbeständiges und auch tränkfähiges Garn verwendet, z. B. das unter dem Handelsnamen Kevlar bekannte Material.

Es ist vorteilhaft, wenn auf das aus der Sperrfolie und der aufgebrachten Haltewendel bestehende Gebilde außen zusätzlich noch einmal eine Schicht Schmelzkleber aufgebracht wird, der einerseits die zweckmäßigerweise garnförmig ausgebildete Haltewendel tränkt und abdichtet und gleichzeitig das Haften der Folie am Mantel und an sich selbst und zwar in der Überlappungsnaht sichert.

Die Erfindung wird nachfolgend anhand von Zeichnungen näher erläutert. Es zeigen

Figur 1   im Querschnitt der Aufbau eines gemäß der Erfindung aufgebauten Kabels und

Figur 2   eine Seitenansicht eines Kabels nach Figur 1 mit teilweise abgeschnittenem Außenmantel.

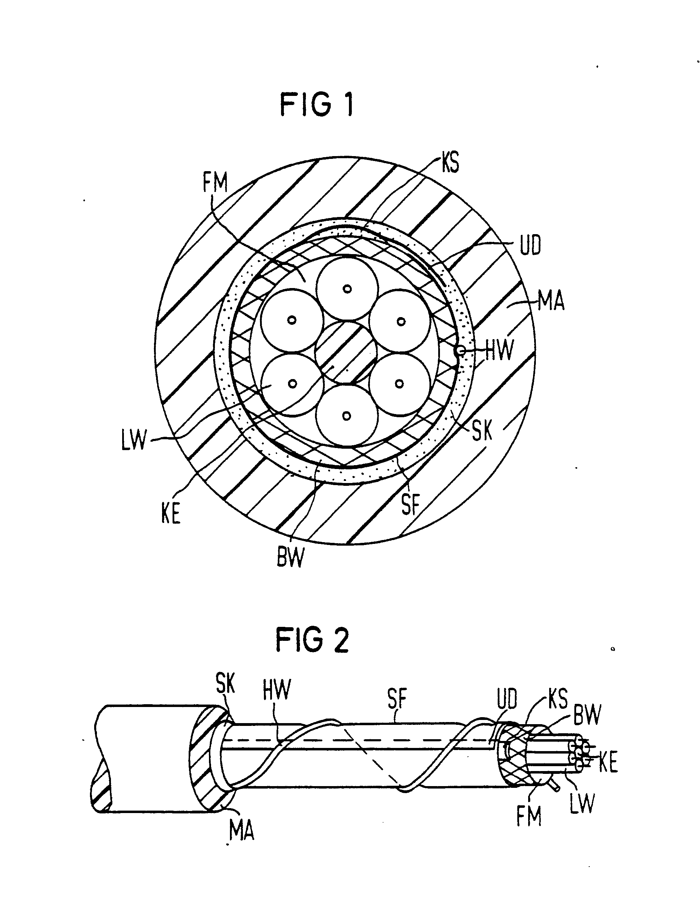

Bei der Anordnung nach Figur 1 ist der aus einem harten Material zum Beispiel Polyäthylen bestehende Außenmantel mit MA bezeichnet. Um die zur Erzielung der Längsdichtigkeit in der Kabelseele vorgesehene Füllmasse FM von dem äußeren Mantel MA fernzuhalten, ist eine Sperrfolie SF vorgesehen, welche einen Überlappungsbereich UD aufweist. An der Innenseite der Sperrfolie SF ist eine hier streifenförmig ausgebildete schmale Klebeschicht KS vorgesehen, die sich in Längsrichtung des Kabels erstreckt und nur einen kleinen Teil des Umfangs bedeckt. Da die Klebeschicht nur in einem Längsstreifen unter der Sperrfolie aufgebracht ist, wird die Biegbarkeit der Kabelseele nicht behindert. Dies gilt vor allem im Vergleich zu Sperrfolien, die über ihre gesamte innere Oberfläche hin mit einem Klebemittel versehen und daher in ihrer Anwendung auf dünnere Kabel beschränkt sind.

Die Sperrfolie SF wird durch eine mit langem Schlag aufgebrachte Haltewendel HW niedergedrückt. Die Tiefe des Eindrückens entspricht dabei zweckmäßig etwa dem Durchmesser der Haltewendel. Um auch eine ausreichende Längsdichtigkeit zwischen dem Außenmantel MA und der Sperrfolie SF zu gewährleisten, ist die Sperrfolie SF außen mit einem Schmelzkleber SK beschichtet und zwar so, daß der gesamte Außenraum völlig geschlossen ist und somit im Bereich zwischen Sperrfolie SF und Außenmantel MA keine Längsspalte oder dergleichen entstehen.

Im Inneren, also im Bereich der eigentlichen Kabelseele kann eine beliebige Kombination von Lichtwellenleitern vorgesehen sein. Im vorliegenden Beispiel ist angenommen, daß sechs gefüllte Lichtwellenleiteradern LW vorhanden sind, die auf einem zugfesten und stauchfesten Kern KE aufgeseilt sind. Es ist aber auch möglich, ohne einen derartigen Kern zu arbeiten und eine größere bzw. kleinere Anzahl von Lichtwellenleiteradern vorzusehen.

Wenn die Haltewendel HW aus einem tränkfähigen Garn (zum Beispiel aus dem unter dem Handelsnamen « Kevlar » der Fa. Du Pont bekannten Material) besteht, so hat dies den Vorteil, daß die vorzugsweise lückenlos aufgebrachte Schmelzkleberschicht SK auch in das Innere der Haltewendel HW eindringt und dadurch verhindert, daß diese Haltewendel ihrerseits eine Führung für seitlich eindringendes Wasser (zum Beispiel bei einer Beschädigung des Außenmantels MA) bildet. Andererseits sollte die Haltewendel HW aus einem möglichst dünnen und auch temperaturbeständigen Material bestehen, um den Herstellungsvorgang zu vereinfachen.

Die Überlappungsstelle im Bereich von UD sollte etwa 10 % bis 40 % des Umfanges der Sperrfolie SF betragen. In diesem Bereich kann durch einen zwischen die beiden sich überlagernden Schichten der Sperrfolie SF eingebrachten Klebestreifen eine Abdichtung bewirkt werden. Der Kleber kann aber auch Bestandteil der äußeren Beschichtung der Schutzfolie sein.

Der Herstellungsvorgang für ein Kabel der in Figur 1 und 2 dargestellten Art läuft vorteilhaft wie folgt ab : Von entsprechenden Vorratsspulen werden die einzelnen Lichtwellenleiteradern (und ggf. der Kern KE) abgezogen und miteinander verseilt. Anschließend wird das so gebildete Leiterbündel durch eine Tränkeinrichtung hindurchgeführt und mit der zähflüssigen Füllmasse FM versehen. Darüber wird die bevorzugt aus Garnen (z. B. unter dem Handelsnamen « Kevlar » der Fa. Du Pont bekanntes Material) bestehende Bewehrung BW aufgebracht und ebenfalls durchtränkt. Auf das gut abgestreifte Garn der Bewehrung BW wird der genannte Schmelzkleberstreifen KS aufgebracht, worauf die aus längseinlaufendem Material bestehende Schutzfolie SF um die gefüllte Kabelseele herumgewickelt und überlappend gehalten wird. Durch einen Haltewendelspinner wird die Haltewendel HW aufgebracht. Diese Haltewendel HW kann auch als ein dünnes zugfestes flaches Band ausgebildet sein. Anschließend wird in einer weiteren Fülleinrichtung die Außenseite der Sperrfolie SF mit dem Schmelzkleber SK beschichtet und zwar so, daß außen ein möglichst zylindrisches Gebilde entsteht. Dies kann in einfacher Weise durch Verwendung eines entsprechenden kreisrunden Abstreifers geschehen. Anschließend wird in bekannter Weise der Außenmantel MA mittels eines Extruders aufgebracht.

Die Schutzfolie SF besteht vorteilhaft aus isolierendem, das heißt nichtmetallischem Material. Weiterhin ist der Mantel MA zweckmäßigerweise ohne zugfeste Zusatzelemente ausgebildet, weil für die Verbesserung der mechanischen Eigenschaften die innenliegende Bewehrung BW ausreichend ist. Die Klebeschicht KS kann als Klebefolie ausgebildet sein oder aus Schmelzkleber bestehen.

**Patentansprüche**

1. Kabel, insbesondere Lichtwellenleiterkabel, das eine Kabelseele (KE, LW ; BW), sowie eine die Kabelseele umgebende Sperrfolie (SF) und einen Außenmantel (MA) enthält, während in der Kabelseele eine die Längsdichtigkeit ergebende Füllmasse (FM) vorgesehen ist, dadurch gekennzeichnet, daß die Sperrfolie (SF) mit der Kabelseele durch eine Klebeschicht (KS) verbunden ist, die nur in Teilbereichen vorhanden ist, wobei die restlichen Bereiche zwischen der Kabelseele und der Sperrfolie von Klebeschicht freigehalten sind.

2. Kabel nach Anspruch 1, dadurch gekennzeichnet, daß die Klebeschicht (KS) unter der Sperrfolie (SF) nur in Form eines Längsstreifens aufgebracht und der restliche Umfang von Klebeschicht frei ist.

3. Kabel nach Anspruch 1, dadurch gekennzeichnet, daß die Klebeschicht (KS) in größeren Abständen punktweise unter der Sperrfolie (SF) verteilt angeordnet ist.

4. Kabel nach Anspruch 1, dadurch gekennzeichnet, daß die Klebeschicht (KS) in Abständen ringförmig unter der Sperrfolie (SF) angeordnet ist.

5. Kabel nach einem der vorhergehenden Ansprüche, dadurch gekennzeichnet, daß der äußere Teil der Kabelseele aus einer, vorzugsweise aufgeseilten, Bewehrung (BW) besteht, wobei durch die Klebeschicht eine Verbindung zwischen der Sperrfolie und dieser Bewehrung entsteht.

6. Kabel nach den Ansprüchen 3 und 5 oder 4 und 5, dadurch gekennzeichnet, daß die Abstände ein ganzzahliges Vielfaches der Schlaglänge der Bewehrung (BW) betragen.

7. Kabel nach einem der vorhergehenden Ansprüche, dadurch gekennzeichnet, daß über der Sperrfolie (SF) in Richtung der Überlappung eine Haltewendel (HW) aufgebracht ist.

8. Kabel nach Anspruch 7, dadurch gekennzeichnet, daß die Haltewendel (HW) aus einem dünnen, vorzugsweise saugfähigen oder benetzbaren temperaturbeständigen Material besteht.

9. Kabel nach einem der vorhergehenden Ansprüche, dadurch gekennzeichnet, daß zwischen der Außenfläche der Sperrfolie (SF) und der Innenfläche des Außenmantels (MA) eine lückenlose Schicht eines Schmelzklebers (SK) eingebracht ist.

10. Kabel nach einem der vorhergehenden Ansprüche, dadurch gekennzeichnet, daß die Sperrfolie aus nicht elektrisch leitendem Material besteht.

## Claims

1. A cable, particularly an optical waveguide cable, which contains a cable core (KE, LW ; BW) as well as a blocking foil (FF) which surrounds the cable core, and an outer cladding (MA) whilst a filling compound (FM), which produces the longitudinal imperviousness, is provided in the cable core, characterised in that the blocking foil (SF) is connected to the cable core by an adhesive layer (KS) which is only present in part regions, the remaining regions between the cable core and the blocking foil being kept free of adhesive layer.

2. A cable according to claim 1, characterised in that the adhesive layer (KS) underneath the blocking foil (SF) is only applied in the form of a longitudinal strip and the remaining circumference is free of adhesive layer.

3. A cable according to claim 1, characterised in that the adhesive layer (KS) is arranged in dots distributed at relatively large intervals underneath the blocking foil (SF).

4. A cable according to claim 1, characterised in that the adhesive layer (KS) is arranged annularly at intervals underneath the blocking foil (SF).

5. A cable according to one of the preceding claims, characterised in that the outer part of the cable core consists of an armouring (BW) which is preferably stranded on, a connection between the blocking foil and this armouring being produced by the adhesive layer.

6. A cable according to claims 3 and 5, or 4 and 5, characterised in that the intervals amount to an integral multiple of the pitch length of the armouring (BW).

7. A cable according to one of the preceding claims, characterised in that a holding helix (HW) is applied over the blocking foil (SF) in the direction of the overlapping.

8. A cable according to claim 7, characterised in that the holding helix (HW) consists of a thin temperature-resistant material which is preferably adsorptive or wettable.

9. A cable according to one of the preceding claims, characterised in that a continuous layer of a fusion adhesive (FK) is inserted between the outer surface of the blocking foil (SF) and the inner surface of the outer cladding (MA).

10. A cable according to one of the preceding claims, characterised in that the blocking foil consists of a material which is not electrically conductive.

## Revendications

1. Câble, notamment câble formant guide d'ondes optiques, qui comporte une âme (KE, LW ; BW), ainsi qu'une feuille d'arrêt (SF) entourant l'âme du câble, et une gaine extérieure (MA), tandis qu'une masse de remplissage (FM) réalisant l'étanchéité longitudinale est prévue dans l'âme du câble, caractérisé par le fait que la feuille d'arrêt (SF) est reliée à l'âme du câble par une couche de colle (KS) qui n'est présente que dans une zone partielle, tandis que dans les autres zones aucune couche de colle n'est présente entre l'âme du câble et la feuille d'arrêt.

2. Câble suivant la revendication 1, caractérisé par le fait que la couche de colle (KS) est disposée au-dessous de la feuille d'arrêt (7), uniquement sous la forme d'une bande longitudinale, et le reste de la périphérie est dénué de toute couche de colle.

3. Câble suivant la revendication 1, caractérisé par le fait que la couche de colle (KS) est disposée ponctuellement, à des distances assez importantes, en étant répartie au-dessous de la feuille d'arrêt (SF).

4. Câble suivant la revendication 1, caractérisé par le fait que la couche de colle (KS) est disposée par intervalles, selon une disposition annulaire, au-dessous de la feuille d'arrêt (SF).

5. Câble suivant l'une des revendications précédentes, caractérisé par le fait que la partie extérieure de l'âme du câble est constituée par une armature (BW) de préférence toronnée, la couche de colle établissant une liaison entre la feuille d'arrêt et cette armature.

6. Câble suivant les revendications 3 et 5 ou 4 et 5, caractérisé par le fait que la longueur des intervalles est égale à un multiple entier de la longueur du pas de l'armature (BW).

7. Câble suivant l'une des revendications précédentes, caractérisé par le fait qu'un élément hélicoïdal de fixation (HW) est disposé par-dessus la feuille d'arrêt (SF) dans la direction du recouvrement.

8. Câble suivant la revendication 7, caractérisé par le fait que l'élément hélicoïdal de fixation (HW) est constitué en un matériau mince résistant à la température, de préférence absorbant ou mouillable.

9. Câble suivant l'une des revendications précédentes, caractérisé par le fait qu'une couche continue d'une colle fusible (SK) est insérée entre la surface extérieure de la feuille d'arrêt (SF) et la surface intérieure de la gaine extérieure (MA).

10. Câble suivant l'une des revendications précédentes, caractérisé par le fait que la feuille d'arrêt est constituée en un matériau non conducteur du point de vue électrique.

0 093 395

# FIG 1

# FIG 2

1